# EUROPEAN PATENT APPLICATION

(11) **EP 1 712 395 A2**
(43) Date of publication of application: **18.10.2006**
(21) Application number: 06112553.0
(22) Date of filing: 12.04.2006
(51) Int. Cl.: B60K 6/04

(54) **Device for temporary increase of the acceleration of a thermal engine and method of operation of said device**

(30) Priority: 15.04.2005 IT MI20050652
(71) Applicant: ALTRA S.P.A., 16141 Genova (IT)
(72) Inventor: Mantovani, Giorgio, 17015 Celle Ligure (IT)
(74) Representative: Borsano, Corrado

(57) **Abstract**

A vehicle with parallel hybrid electrical traction able to temporarily increase performance, with a reversible electric motor (ME) mechanically connected to the shaft of the thermal engine (MD) or to the fast shaft of the gearbox (CM) powered via an electronic converter (CE and CNT) with a high power energy accumulation system (AE) is described.

## Description

This invention refers to the field of hybrid traction devices, more particularly, to a device able to temporarily increase the acceleration of a thermal engine and a method of operation of said device.

Special heavy land vehicles, especially airport fire-fighting vehicles and military vehicles, in particular and infrequent conditions of danger require maximum performance in order to guarantee their safety and that of others; fire-fighting vehicles must arrive at the fire in the shortest time possible and be able to gain a position of safety quickly in the case of a danger of explosion, while military vehicles under fire must be able to move by a length in a second in order to avoid being hit and to avoid the shot. On the other hand, it is not possible to obtain a high temporary increase in power and torque of thermal traction engines as these are already intrinsically restricted by inertia and by thermo-fluidynamics as regards instantaneous performance.

Phisical layouts of electric motors coupled to thermal engines are known, for example from GB-A-2340463. These systems however era not suited to the purpose of ensuring instantaneous intervention of the electric motor when necessary for a short time.

Therefore, the purpose of this invention is to solve the aforementioned problem using an electric motor in parallel to the thermal engine.

Without changing the architecture of the vehicle and of the driveline, an electric motor can deliver much higher torque and power values, instantaneously and for short time periods, than a thermal engine of the same size and weight. Furthermore, the performance of the vehicle is not downgraded during normal use as far as consumption and emissions are concerned. The electrical energy and power necessary for the electric motor are stored and supplied by a suitable energy accumulation system with a high specific power.

More particularly, this invention refers to a device for hybrid electrical parallel traction of a vehicle and a method of operation of such device able, in emergency conditions, to transfer the maximum additional torque to the conventional traction chain in order to maximize performance as regards acceleration and pick-up.

The device for electrical parallel hybrid traction is applied in particular to a vehicle with a conventional traction chain in order to temporarily and substantially increase its acceleration and pick-up.

In particular, this invention refers to a device for temporary increase of the acceleration of a thermal engine, a method for operation of such device and a vehicle incorporating such device, as described in more detail in the claims that are an integral part of this description.

The purposes and advantages of this invention are clearly illustrated in the following detailed description of an example of embodiment thereof (and of its variants) and by the drawings, attached for example purposes and which are not be considered in a limitative sense, in which:

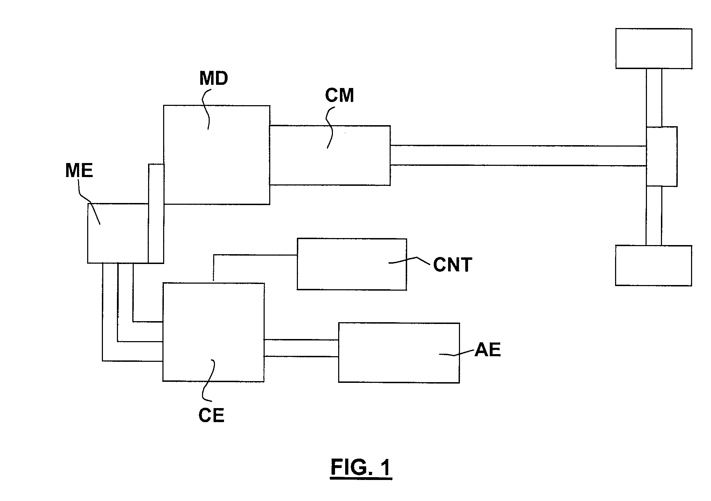

figure 1 is a block diagram of the device subject of the invention.

The invention envisages construction of an electrical parallel hybrid traction system able, in particular operating conditions, to increase the torque of the conventional traction chain instantaneously and for a short time period, in order to maximize vehicle performance temporarily and instantaneously.

To achieve this purpose, it is provided to increase torque and power for a few tens of seconds and only in particular non-repetitive operating conditions that will seldom occur in the life of the vehicle.

The solution subject of the invention can be applied to any land vehicle, with or without tyres, with two or more axles, with one or more caissons, that requires high-level performance in particular operating conditions and whose performance is not already restricted by the limit of adherence in traction.

The torque and power of the conventional traction chain are increased using an electric motor connected to the thermal engine, preferably splined on, mechanically in parallel to the thermal engine or to the fast shaft of the gearbox, and powered by an electrical energy accumulation system with high power factor. More particularly, fig. 1 shows a thermal engine MD, for example diesel, an electric motor ME, connected in parallel to the thermal engine, a gearbox CM connected to the thermal engine, a control system CNT that controls an electronic converter CE connected to the electric motor, and an energy accumulation system AE, connected to the electric motor by means of the electronic converter CE.

The electric motor ME can be constructed according to a known method, using for example a permanent magnet synchronous, or asynchronous electrical machine with a peak power lower than that of the thermal engine MD, and in any case of sufficient size to maintain the conventional traction chain basically unchanged.

The nominal working voltage of the electric motor, considering the power values involved and the state-of-the-art of the technology, may be between 110 and 380Vac.

The maximum torque of the electric motor ME is defined according to the maximum increase in acceleration to be obtained.

During operation, in emergency conditions, the driver of the vehicle, and/or for military vehicles an automatic safety system requests maximum additional torque to the conventional traction chain in order to maximize performance with regard to acceleration and pick-up, communicating this to the control system CNT. Maximum torque may be requested by the driver pressing the accelerator pedal fully down (limit-switch) or using a specific button that can be pressed with the hands or feet.

The control system CNT will ask the electric motor ME to deliver maximum torque for a pre-established limited time, restricted in any case by the charge conditions of the accumulation system AE, and with a coefficient of use that is restricted beforehand. The control system CNT will also recharge the accumulation system AE according to the most appropriate method, for example during the first braking or stopping phase.

The electronic converter CE may be constructed according to a known way, using a three-branch three-phase inverter with digital control. The nominal working voltage of CE must be consistent with that of ME. The maximum current of CE, which is in fact proportional to the torque delivered by ME, is defined according to the maximum increase in acceleration to be obtained.

The electronic converter CE comprises the circuits and controls necessary to carry out the following functions:
- Recharge the energy accumulation system AE during normal operation or in the braking phases or when necessary and, possibly, using a further 24V (or 12 V) battery converter, eliminating the alternator, tapping energy from the system by means of ME, used in this case as generator, and transferring this to the accumulation system AE according to pre-established laws and rules and in particular regulating the voltage provided by ME to recharge AE.
- Convert the energy available in the energy accumulation system AE into a voltage with variable amplitude and frequency, able to power ME and to operate this with the additional torque required during the acceleration increase phase.
- Tap energy from AE and power the engine ME for the MD start-up function to permit possible elimination of the starter motor.
- Convert the energy available in the energy accumulation system AE into a voltage of variable amplitude and frequency, able to power ME so as to operate this at the speed and with the torque necessary during other possible operation modes.

The electronic converter CE together with the control system CNT perform the following main functions, and comprise circuits and interfaces able to implement the following controls:
- guarantee charging of the accumulation system AE tapping energy from the vehicle by means of ME in the most favorable operating conditions for system functioning and for energy saving, that is to say during the braking and constant speed phases;
- guarantee start-up of the thermal engine MD by means of the electric motor ME;
- guarantee any recharging of the 24 V (or 12 V) batteries;
- guarantee temporary increase of acceleration providing extra torque by means of the electric motor ME when required;
- interface the ABS ASR system of the vehicle so as to prevent loss of grip of the wheels due to the extra torque applied by ME;
- interface the vehicle control devices such as brake, accelerator, ignition and start-up key, control the demand for increased acceleration;
- possibly control the electric motor ME with a temporary slowing brake function or in temporary parallel minimum hybrid mode in order to temporarily improve vehicle all-round performance.

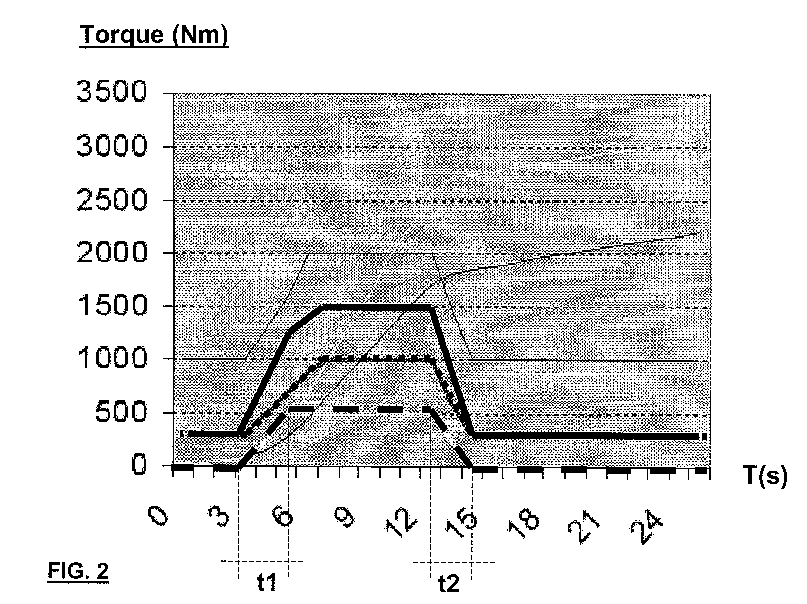

The control system CNT includes suitable software for enabling the above functions. In particular it performs the following functions:
- keeping the accumulation system AE charged: once known the charging level, the temperature, the recharging curves and the operating condition of the vehicle, it provides for the charging at the optimum level, when necessary;
- providing for the starting-up of the thermal engine, if necessary: after checking the starting-up condition and a suitable request of the driver or of the automatic system, it provides for the starting-up of the thermal engine MD;
- providing for recharging of the auxiliary batteries at 24 V (or 12 V): once known the charging level, the temperature, the recharging curves and the operating condition of the vehicle, it provides for the charging at the optimum level, when necessary;
- providing for temporarily increasing the acceleration: once known the working conditions of the vehicle, the conditions of blocks AE; CE, ME, MD amd CM, and a request of the driver or of the automatic system, it provides for temporarily increasing the acceleration of the vehicle by supplying the supplementary maximum torque by the electric motor ME . For example with reference to Fig. 2, there are shown a supplementary torque curve supplied by the electric motor (dashed line), the torque curve supplied by the thermal engine (dotted line) and the total torque curve (full line) given by the addition of the two contributions: the electric motor ME is able to supply a maximum of 500 Nm when activated according to the invention, in 2.5 s delay (t1) for a given time period of 6 seconds, and then it is switched off again in 2 s (t2). The total torque curve is going up to the value of 1.500 Nm, from the value of 1.000 Nm of the thermal engine MD;
- interfacing with the ABS ASR system of the vehicle, in acceleration or electric braking, to avoid undesirable slipping of the weels.

The energy accumulation system AE may be constructed using known components, electro-chemical accumulators and/or supercapacitors. The power and energy of this system must be scaled according to the specific purpose for which it is intended.

Taking into account the temporary use of the device, whose main purpose is to afford a temporary increase in acceleration, the power values involved and the current state-of-the-art of accumulation systems, the power of the system is slightly overscaled according to the maximum power of ME.

The method of operation of the device to which the invention refers includes the following main steps, carried out in sequence.

Step 1: the thermal engine MD is ON and the vehicle may be stopped or moving.

Step 2: a condition suddenly arises that requires maximum additional torque which results in intervention of the electric motor ME, with manual or automatic activation, controlled by the control system CNT.

Step 3: the electric motor ME delivers an additional maximum torque for a maximum pre-established time (Fig. 2), tapping electrical energy from the accumulation system AE.

At the end of this maximum time or when the condition of demand has ended, the electric motor stops delivering maximum additional torque. If the vehicle is braking, the electric motor can assist the braking operation, powered by the braking torque produced by the main traction system, or can act as electrical generator providing energy to the electrical energy accumulation system AE, recharging this.

Optionally, further steps are envisaged, as described, referring to functioning of the electronic converter CE and the CNT control system described above.

With regard to the method of operation, for example purpose and not restricted thereto, consider the case of an airport fire-fighting vehicle in alarm condition. When an emergency occurs (for example an airplane has caught fire), the vehicle must arrive at the aircraft in the shortest time possible and then escape as quickly as possible.

In a first step, the vehicle is stopped beside the runway awaiting an emergency condition with the thermal engine MD ON and the accumulation system AE fully charged.

In a second step, the driver presses the accelerator completely down in order to reach the scene of the fire; the control system CNT, via the electronic converter CE and in accordance with the ASR system, delivers the additional torque to the traction system (MD +CM) tapping electrical energy from the accumulation system AE. Phase two lasts approx. 20 - 30 s, after which the vehicle reaches maximum possible speed. The system AE is not completely charged.

In a third step, the vehicle travels at maximum speed with the accelerator fully depressed. The thermal engine MD is able to guarantee that the vehicle travels at maximum speed; the CNT does not intervene. The system AE remains not fully charged. Step three can last from zero to many seconds (objective achieved or curve).

In a fourth step, the driver brakes to slow down and/or stop the vehicle: via CE and ME, CNT takes the braking torque from the traction system (MD +CM) sending electrical energy to AE: the fourth step lasts approx. 10 - 20 s after which the vehicle stops or switches to constant regime. The system AE has or has not been completely recharged.

In a fifth step, the vehicle is stopped (or on constant regime) with engine MD ON and accumulation system AE not completely charged: via CE and ME, CNT takes the torque from the traction system (MD +CM) sending electrical energy to AE. This step may last up to approx. 60 s, after which the vehicle returns to the first phase with the possibility of escaping as quickly as possible or goes directly to the second step.

Construction of the device envisages use of a conventional traction chain without modifying this, adding only an electric motor ME splined on the thermal engine or on the fast shaft of the gearbox. The device is intended to be applied and used preferably on particular special vehicles with very high temporary performance requirements.

The electronic converter CE and the control system CNT are constructed with known components.

Constructions variants are possible to the non-limiting example described, without however going out of the scope of protection of this invention, including all the equivalent embodiments for a person skilled in the art.

According to the description provided above, a person skilled in the art is able to carry out the invention without introducing further construction details.

## Claims

1. Device for temporary increase of acceleration of a thermal engine (MD), comprising:
- at least an electric motor (ME) connected to the said thermal engine and able to provide a maximum additional torque to the said thermal engine;
- an electrical energy accumulation system (AE) that supplies energy to the said electric motor;
- control means (CE, CNT) able to cause temporary and immediate activation of the said electric motor so as to increase the drive torque of the said thermal engine by a value equal to the said additional maximum torque instantaneously, with manual control or activation of an automatic protection system.

2. Device according to claim 1 **characterized in that** it comprises a limit-switch applied to the accelerator pedal for said manual control.

3. Device according to claim 1 **characterized in that** it comprises a hand-operable button for said manual control.

4. Device according to claim 1 **characterized in that** the said electric motor is splined mechanically in parallel to the said thermal engine.

5. Device according to claim 1 **characterized in that** the said electric motor is splined mechanically in parallel to a fast shaft of a gearbox connected to the said thermal engine.

6. Device according to claim 1 **characterized in that** the said electric motor is a permanent magnet synchronous or asynchronous electrical machine, with a peak power lower than that of the said thermal engine.

7. Device according to claim 1 **characterized in that** the said maximum additional torque is defined according to a maximum increase in acceleration.

8. Device according to claim 1 **characterized in that** the said means of control (CE, CNT) include means for recharging the said electrical energy accumulation system (AE) and replace an alternator generating electrical energy by means of the said electric motor (ME) used as generator, possibly also in the braking phases.

9. Device according to claim 1 **characterized in that** the said means of control (CE, CNT) include means of tapping energy from the said electrical energy accumulation system (AE) and of powering the said electric motor (ME) for start-up of the said thermal engine (MD), permitting elimination of the starter motor.

10. Method of operation of the device for temporary increase of acceleration of a thermal engine (MD) according to any of the previous claims **characterized in that** it includes the following steps in sequence:
- the said thermal engine (MD) is ON, with the vehicle stopped or moving;
- in the case of a sudden request for maximum drive torque, the said electric motor (ME) is activated, either manually or automatically with activation of the said control menas (CE, CNT);
- the said electric motor (ME) delivers a maximum additional torque for a maximum pre-established time.

11. Method of operation according to claim 8 **characterized in that**, at the end of the said phases, if the vehicle is braking, the said electric motor assists the braking operation, powered by the braking torque produced by the main traction system or may operate as electrical generator providing energy to the said electrical energy accumulation system (AE), recharging this.

12. Method of operation according to claim 8 **characterized in that** the said means of control (CE, CNT) recharge the said electrical energy accumulation system (AE) and replace an alternator, generating electrical energy by means of the said electric motor (ME) used as generator.

13. Method of operation according to claim 8 **characterized in that** the said means of control (CE, CNT) tap energy from the said electrical energy accumulation system (AE) and power the said electric motor (ME) for start-up of the said thermal engine (MD).

14. Vehicle **characterized in that** it includes a device for temporary increase of acceleration of a thermal engine as in any of the claims from 1 to 7.
